# EUROPÄISCHE PATENTSCHRIFT

(11) **EP 1 702 401 B1**
(45) Veröffentlichungstag und Bekanntmachung des Hinweises auf die Patenterteilung: **08.09.2010**
(21) Anmeldenummer: 04802730.4
(22) Anmeldetag: 15.11.2004
(51) Int. Cl.: H02K 23/26

(54) **ELEKTRISCHE MASCHINE MIT KOMMUTATORLÄUFER**
ELECTRICAL MACHINE WITH A COMMUTATOR ARMATURE
MACHINE ELECTRIQUE A ROTOR A COLLECTEUR

(30) Priorität: 30.12.2003 DE 10361811
(43) Veröffentlichungstag der Anmeldung: 20.09.2006
(73) Patentinhaber: ROBERT BOSCH GMBH, 70442 Stuttgart (DE)
(72) Erfinder: ROOS, Gerald, 77815 Buehl (DE); STRUPP, Michael, Cheongwon-gun 363-946 (KR); AMBACH, Gerlinde, 88131 Bodolz (DE)
(86) Internationale Anmeldenummer: PCT/DE2004/002515
(87) Internationale Veröffentlichungsnummer: WO 2005/064774

(56) Entgegenhaltungen:
- CH-A- 551 097
- US-A- 4 876 472
- PATENT ABSTRACTS OF JAPAN Bd. 1998, Nr. 11, 30. September 1998 (1998-09-30) & JP 10 174403 A (DENSO CORP), 26. Juni 1998 (1998-06-26)

## Beschreibung

### Stand der Technik

Die Erfindung betrifft eine elektrische Maschine mit mindestens vier Erregerpolen im Stator und mit einem Kommutatorläufer nach der Gattung des Anspruchs 1.

Aus der Druckschrift DE 197 57 279 C1 ist es bekannt, bei einem vierpoligen Elektromotor einen Kommutatorläufer mit 12 Kommutatorlamellen und 12 daran angeschlossene Spulen zu verwenden, um eine geringe Momentenwelligkeit und eine gute Kommutierung zu erzielen. Dabei sind die einander diametral gegenüberliegenden Lamellen über Kontaktbrücken miteinander verbunden, um die Stromversorgung des Läufers symmetrisch zu gestalten und mit nur einem Bürstenpaar sicher zu stellen. Die Kontaktbrücken werden beim Wickeln der Spulen hergestellt, indem zunächst von einer Lamelle aus eine Spule gewickelt wird und anschließend über die benachbarte Lamelle mit dem Spulendraht eine Kontaktbrücke zur gegenüberliegenden Lamelle gelegt wird, um von dort aus im Wechsel die weiteren Spulen und Kontaktbrücken herzustellen. Dabei werden die Läuferspulen paarweise auf gegenüberliegenden Seiten mit zwei sogenannten Flyern hergestellt und die Kontaktbrücken werden anschließend durch Verdrehen des Läufers um 180° gebildet. Bei derartigen Maschinen ist es insbesondere für kleine Baugrößen recht aufwendig die hohe Anzahl von Spulen in die Nuten des Läufers einzuwickeln. Außerdem kreuzen sich die über drei Polzähne gewickelten Spulen an den Wickelköpfen, was zu einer großen Ausladung der Wickelköpfe führt. Durch den großen Wickelschritt über drei Nuten erhält man außerdem lange Wickelkopf-Verbindungen, die sowohl materialaufwendig sind als auch zu hohen Wärmeverlusten führen.

Aus der Druckschrift US-PS 4,532,449 ist ferner eine elektrische Maschine mit Kommutatorläufer bekannt, bei dem die Anzahl der Läuferspulen nur noch halb so groß wie die Anzahl der Kommutatorlamellen ist. Dort werden fünf Spulen von einem Bürstenpaar über zehn Lamellen versorgt. Die Spulen werden dabei als Einzelzahnwicklungen durchgewickelt, indem jeweils von einer zur nächsten Spule ein Polzahn übersprungen wird. Anfang und Ende der Spulen werden jeweils mit Lamellen kontaktiert, zwischen denen je eine Lamelle frei bleibt. Diese freien Lamellen werden zur Stromversorgung der Spulen über Kontaktbrücken mit den ihnen gegenüberliegenden Lamellen verbunden, die mit den Spulen in Verbindung stehen. Diese Lösung hat den Nachteil, dass die Kommutierungsvorgänge unter den beiden um 90° zueinander versetzten Kohlebürsten zeitlich versetzt stattfinden, wodurch die kommutierenden Spulen einseitig radial wirkende Kräfte verursachen, die zu Geräuschentwicklungen sowie zu einseitigen Belastungen der Läuferlager mit entsprechend größerem Lagerverschleiß führen können. Außerdem tritt durch eine erhöhte Lamellenspannung bei zehn statt zwölf Lamellen ein verstärktes Bürstenfeuer auf, welches die Lebensdauer des Kommutators und damit auch die Lebensdauer der Maschine beeinträchtigen kann.

Eine ähnliche elektrische Maschine ist aus der US-PS 4,876,472 bekannt, bei der fünf Einzelzahnwicklungen durchgewickelt werden, indem jeweils von einer Spule zur nächsten Spule über eine Kontaktbrücke zwei Polzähne übersprungen werden. Anfang und Ende der fünf Spulen werden dabei unmittelbar auf benachbarte Lamellen geschaltet. Dazu werden zehn Kommutatorlamellen benötig, mit dem Nachteil, dass auch hier die Kommutierungsvorgänge unter den beiden um 90° zueinander versetzten Kohlebürsten zeitlich nacheinander stattfinden.

Mit der vorliegenden Lösung wird angestrebt, bei elektrischen Maschinen, deren Anzahl von Läuferspulen nur halb so groß wie die Lamellenanzahl ist, die Kommutierung zu verbessern und die auch in kleinen Baugrößen ohne Spulenkreuzungen an den Wickelköpfen herstellbar sind.

### Vorteile der Erfindung

Die elektrische Maschine mit den kennzeichnenden Merkmalen des Anspruchs 1 hat den Vorteil, dass durch die neue Zuordnung der Spulen zu den Lamellen die Spulen einerseits als Einzelzahnspulen eine geringe axiale Wickelkopf-Länge und -Ausladung haben und dass andererseits mitsamt der Kontaktbrücken eine bessere Kommutierung und damit eine höhere Lebensdauer erzielt wird.

Durch die in den Unteransprüchen aufgeführten Maßnahmen ergeben sich vorteilhafte Ausgestaltungen und Weiterbildungen der im Hauptanspruch angegebenen Merkmale.

So ergibt sich im Hinblick auf eine hohe Momentenbildung eine besonders günstige Flussverteilung in den Spulen dadurch, dass die in der einen Drehrichtung gesehen benachbarten Spulen mit ihren Anfängen und Enden auf die in der anderen Drehrichtung gesehen benachbarten Lamellen gelegt sind. Zweckmäßigerweise sind dabei die Anfänge und Enden der benachbarten Spulen abwechselnd direkt beziehungsweise indirekt über eine der Kontaktbrücken auf benachbarte Lamellen gelegt. Ferner ist es für die Herstellung der Spulen durch Wickelautomaten vorteilhaft, wenn die auf benachbarten Polzähnen angeordneten Spulen jeweils unmittelbar oder mittelbar über eine der Kontaktbrücken zueinander in Reihe geschaltet sind. Zweckmäßigerweise werden dabei die benachbarten Spulen abwechselnd unmittelbar beziehungsweise über eine der Kontaktbrücken zueinander in Reihe geschaltet. In besonders einfacher Weise sind dabei alle Spulen und Kontaktbrücken durchgehend von einem Wickeldraht hergestellt, wobei zweckmäßigerweise mittels Wickelautomaten die Spulen und Kontaktbrücken im Wechsel durchgehend gewickelt sind.

Um die Kontaktbrücken möglichst geordnet an den Wickelköpfen der Spulen verlegen zu können, wird vorgeschlagen, dass mindestens ein Teil der Kontaktbrücken, vorzugsweise sämtliche Kontaktbrücken von der Kommutatorseite des Läufers weg durch dessen Nuten auf die dem Kommutator abgewandte Seite verlegt sind. Um dabei die Kontaktbrücken an der Läuferrückseite nicht durch ein dort angebrachtes Lager zu beschädigen, sind sie zweckmäßigerweise um mindestens einen und höchstens zwei benachbarte Zähne des Läufers geführt. Um auch Anfang und Ende der Spulen möglichst geordnet auf die jeweiligen Lamellen des Kommutators zu führen, wird ferner vorgeschlagen, dass Anfang und Ende jeder zweiten Spule von der Kommutatorseite durch benachbarte Nuten auf die Läuferrückseite gelegt werden.

### Zeichnung

Die Erfindung wird im Folgenden beispielhaft anhand der Figuren näher erläutert. Es zeigen:
- Figur 1: eine erfindungsgemäße elektrische Maschine in der Vorderansicht,
- Figur 2: ein erstes Ausführungsbeispiel mit dem Läufer der Maschine aus Figur 1 in vergrößerter Darstellung, mit sechs Spulen auf sechs Polzähnen und einen Kommutator mit zwölf Lamellen und zwei Bürsten,
- Figur 3: zeigt das Wickelschema für den Läufer nach Figur 2.
- Figur 4: zeigt als zweites Ausführungsbeispiel den Läufer gemäß Figur 2, jedoch mit anders verschalteten Spulen und
- Figur 5: zeigt dazu das entsprechende Wickelschema.
- Figur 6: zeigt als drittes Ausführungsbeispiel ein dreiteiliges Wickelschema für die sechs Spulen eines Läufers gemäß Figur 2, mit einer weiteren Variante der Verschaltung.

### Beschreibung der Ausführungsbeispiele

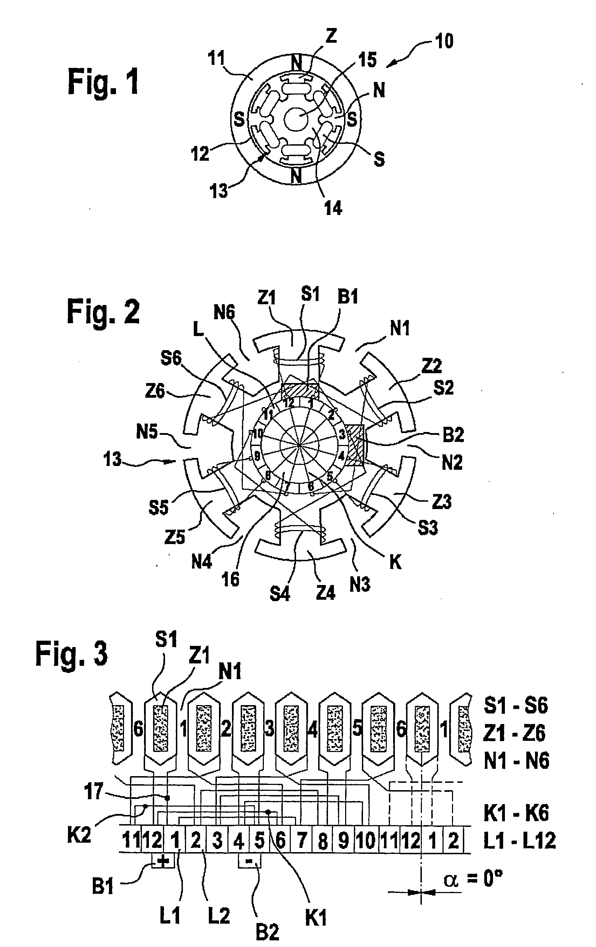

In Figur 1 ist ein permanent magnetisch erregter vierpoliger Gleichstrommotor als elektrische Maschine in einer Vorderansicht dargestellt und mit 10 bezeichnet. Derartige Maschinen werden bevorzugt für Stellantriebe und dergleichen in Kraftfahrzeuge eingesetzt und müssen bei hohen Belastungen möglichst über die ganze Lebensdauer des Fahrzeugs zuverlässig arbeiten. Dementsprechend muss ihr Aufbau möglichst robust sein. Die elektrische Maschine 10 hat einen vierpoligen Stator 11, der über einen Arbeitsluftspalt 12 mit einem Kommutatorläufer 13, nachfolgend Läufer genannt, zusammenwirkt. Der Läufer 13 besteht aus einem Blechpaket 14, dass auf einer beidseitig gelagerten Läuferwelle 15 befestigt ist. Am Umfang des Blechpaketes 14 sind sechs gleichmäßig verteilte Polzähne Z angeordnet, zwischen denen jeweils Nuten N zur Aufnahme von sechs Spulen S ausgebildet sind. Die Spulen S sind als Einzelzahnspulen um je einen Polzahn Z durch Wickelautomaten hergestellt. Die Spulen S werden dabei in besonderer Weise mit einem an der Rückseite des Blechpaketes 14 auf die Läuferwelle 15 aufgesetzten Kommutator verschaltet.

Figur 2 zeigt in einem ersten Ausführungsbeispiel der Erfindung den Läufer 13 in vergrößerter Darstellung von der Rückseite. Dort ist ein Kommutator 16 mit gleichmäßig am Umfang verteilten zwölf Lamellen L angeordnet, die mit zwei ortsfesten Kohlebürsten B1 und B2 zusammenwirken. Die Kohlebürsten sind um 90° gegeneinander versetzt und werden zum Betrieb der elektrischen Maschine mit Gleichstrom versorgt. Um bei einer vierpoligen Maschine die Stromversorgung des Läufers symmetrisch zu gestalten und mit nur einem Bürstenpaar sicherzustellen, sind die jeweils einander diametral gegenüberliegenden Lamellen L des Kommutators 16 jeweils über separate Kontaktbrücken K miteinander verbunden. Dort sind die sechs Spulen mit S1 bis S6, die sechs Polzähne mit Z1 bis Z6 und die sechs Nuten mit N1 bis N6 bezeichnet.

Für eine günstige magnetische Durchflutung des Läufers mittels der sechs Spulen N ist eine geradzahlige Spulenzahl von Bedeutung; denn durch die gleichzeitige Kommutierung der nunmehr sich jeweils einander gegenüberliegenden Spulen S addieren sich die durch die Kommutierung verursachten radialen Kraftkomponenten an den sich gegenüberliegenden Zähnen Z zu Null. Desweiteren ist für die Erzielung einer möglichst hohen Momentbildung am Läuferumfang die Verschaltung der Spulen S mit den Kommutatorlamellen L von Bedeutung. Dabei ist vorgesehen, dass von den auf benachbarten Polzähnen Z angeordneten Spulen S jeweils Anfang und Ende der einen Spule S unmittelbar auf zueinander benachbarte Lamellen L und Anfang und Ende der anderen Spule S über eine der Kontaktbrücken K auf zueinander benachbarte Lamellen L geschaltet sind. Außerdem sind die auf benachbarten Polzähnen Z angeordneten Spulen S jeweils abwechselnd unmittelbar beziehungsweise mittelbar über eine der Kontaktbrücken K zueinander in Reihe geschaltet.

Für eine möglichst starke Ausbildung des Läuferdrehmomentes ist ferner von Bedeutung, dass die in der einen Drehrichtung gesehen benachbarten Spulen S mit ihren Anfängen und Enden jeweils auf die in der anderen Drehrichtung gesehen benachbarten Lamellen L gelegt sind. Dies erfolgt übereinstimmend bei allen drei Ausführungsbeispielen, bei denen die benachbarten Spulen S abwechselnd direkt und indirekt über eine der Kontaktbrücken K miteinander verbunden sind.

Zur näheren Erläuterung der Spulenverschaltung mit dem Kommutator 16 zeigt Figur 3 das Wickelschema für die Spulen S1 bis S6 des Läufers 13 aus Figur 2. Zur Erläuterung des Wickelschemas nach Figur 3 dient ferner die Wickeltabelle 1, die zur automatischen Herstellung der sechs Spulen S1 bis S6 und der sechs Kontaktbrücken K1 bis K6 und deren Kontaktierung an den Lamellen L1 bis L12 des Kommutator 16 in eine Steuerung eines Wickelautomaten eingegeben werden kann.

### Wickeltabelle 1

| S/K | Lamelle | | Nut | Windg. | Nut | | Lamelle |
|---|---|---|---|---|---|---|---|
| S1 | 1 | > | 1 | 42 | 6 | > | 12 |
| K1 | 12 | > | | | | > | 6 |
| S2 | 6 | > | 1 | 42 | 2 | > | 11 |
| K2 | 11 | > | | | | > | 5 |
| S3 | 5 | > | 3 | 42 | 2 | > | 4 |
| K3 | 4 | > | | | | > | 10 |
| S4 | 10 | > | 3 | 42 | 4 | > | 3 |
| K4 | 3 | > | | | | > | 9 |
| S5 | 9 | > | 5 | 42 | 4 | > | 8 |
| K5 | 8 | > | | | | > | 2 |
| S6 | 2 | > | 5 | 42 | 6 | > | 7 |
| K6 | 7 | > | | | | > | 1 |

Aus der Wickeltabelle 1 ist erkennbar, dass alle sechs Spulen S und Kontaktbrücken K durchgehend von einem Spulendraht herzustellen sind. Ferner ist erkennbar, dass dort die Spulen S und Kontaktbrücken K im Wechsel durchgehend gewickelt sind. Dabei wird im Einzelnen wie folgt vorgegangen:

Beginnend mit der Spule S1 in Figur 2 und 3 wird der Wickeldraht 17 zunächst an Lamelle L1 befestigt, dann der Anfang der Spule S1 durch die Nut N1 gelegt, sodann werden 42 Windungen um den Polzahn Z1 gewickelt, um dann das Spulenende durch die Nut N6 an der Lamelle L12 zu befestigen. Anschließend wird ohne Unterbrechung des Spulendrahts die erste Kontaktbrücke K1 von Lamelle L12 zur Lamelle L6 gelegt. Von dort wird der Anfang Spule S2 durch die Nut N1 gelegt, die Spule S2 mit 42 Windungen um den Zahn Z2 gewickelt und das Ende durch Nut 2 zur Lamelle L11 geführt. Anschließend wird von dort die Kontaktbrücke K2 von Lamelle 11 zur Lamelle L5 gelegt. Von dort wird dann der Anfang der Spule S3 durch die Nut N3 gelegt, die Spule mit 42 Windungen um den Zahn Z3 gewickelt und das Ende durch die Nut N2 zur Lamelle L4 gelegt. Dann folgt die Brücke K3 von Lamelle L4 zu Lamelle L10. Anschließend wird der Anfang der Spule S4 von Lamelle 10 durch die Nut N3 gelegt, die Spule mit 42 Windungen um den Zahn Z4 gewickelt und das Ende durch Nut N4 auf Lamelle L3 gelegt. Dann folgt die Kontaktbrücke K4 von Lamelle L3 auf Lamelle L9. Von dort wird der Anfang der Spule S5 durch die Nut N5 gelegt, die Spule mit 42 Windungen auf den Polzahn Z5 gewickelt und das Spulenende durch Nut N4 auf Lamelle L8 gelegt. Nun folgt die Kontaktbrücke K5 von Lamelle L8 auf Lamelle L2. Anschließend wird die Spule S6 mit ihrem Anfang von Lamelle L2 durch die Nut N5 gelegt, mit 42 Windungen auf den Polzahn Z6 gewickelt und das Ende durch die Nut N6 auf Lamelle L7 gelegt. Zum Abschluss wird dann noch die Kontaktbrücke K6 von Lamelle 7 auf Lamelle 1 gelegt. Der Wickeldraht wird hier schließlich abgetrennt. Zur besseren Übersicht sind in Figur 3 die Nuten N sowie die Lamellen L durchnummeriert.

Am Kommutator 16 des Läufers nach Figur 2 können die Kontaktbrücken K auch separat hergestellt und mit den jeweils einander gegenüberliegenden Lamellen verschaltet werden. In diesem Falle werden auch die sechs Spulen S einzeln, paarweise oder zu dritt gleichzeitig hergestellt und mit ihren Lamellen L kontaktiert. Die Wickeltabelle 2 zeigt für diesen Fall die entsprechende Schrittfolge für einen Wickelautomaten:

### Wickeltabelle 2

| S/K | Lamelle | | Nut | Windg. | Nut | | Lamelle |
|---|---|---|---|---|---|---|---|
| S1 | 1 | > | 1 | 42 | 6 | > | 12 |
| S2 | 6 | > | 1 | 42 | 2 | > | 11 |
| S3 | 5 | > | 3 | 42 | 2 | > | 4 |
| S4 | 10 | > | 3 | 42 | 4 | > | 3 |
| S5 | 9 | > | 5 | 42 | 4 | > | 8 |
| S6 | 2 | > | 5 | 42 | 6 | > | 7 |

Dort wird der Anfang der Spule S1 von Lamelle L1 durch die Nut N1 mit 42 Windungen um den Zahn Z1 gewickelt und das Ende durch die Nut 6 auf Lamelle L12 gelegt, wo der Wickeldraht 17 gekappt wird. Der Anfang der Spule S2 wird dann von Lamelle L6 durch Nut N1 gelegt, die Spule mit 42 Windungen auf Zahn Z2 gewickelt und das Ende durch die Nut N2 auf Lamelle L11 gelegt. Der Anfang der Spule S3 wird nun von Lamelle L5 durch die Nut N3 gelegt, die Spule mit 42 Windungen auf den Zahn Z3 gewickelt und das Ende durch die Nut N2 auf Lamelle L4 gelegt. Der Anfang der Spule S4 wird von Lamelle 10 durch die Nut N3 gelegt, die Spule mit 42 Windungen um den Zahn Z4 gewickelt und das Ende durch die Nut N4 auf Lamelle L3 gelegt. Der Anfang der Spule S5 wird von Lamelle L9 durch die Nut N5 gelegt, die Spule mit 42 Windungen um den Zahn Z5 gewickelt und das Ende durch die Nut N4 auf Lamelle L8 gelegt. Schließlich wird noch die Spule S6 mit ihrem Anfang von Lamelle L2 durch die Nut N5 gelegt, mit 42 Windungen um den Zahn Z6 gewickelt und das Ende durch die Nut N6 auf Lamelle L7 gelegt. Die Spulen S1, S3 und S5 sowie die Spulen S2, S4, S6 können jeweils auch gleichzeitig durch einen entsprechenden Wickelautomaten hergestellt werden, da ihre Verschaltungen mit den ihnen zugeordneten Lamellen jeweils gleich sind wie dies aus Figur 2 und 3 zu entnehmen ist.

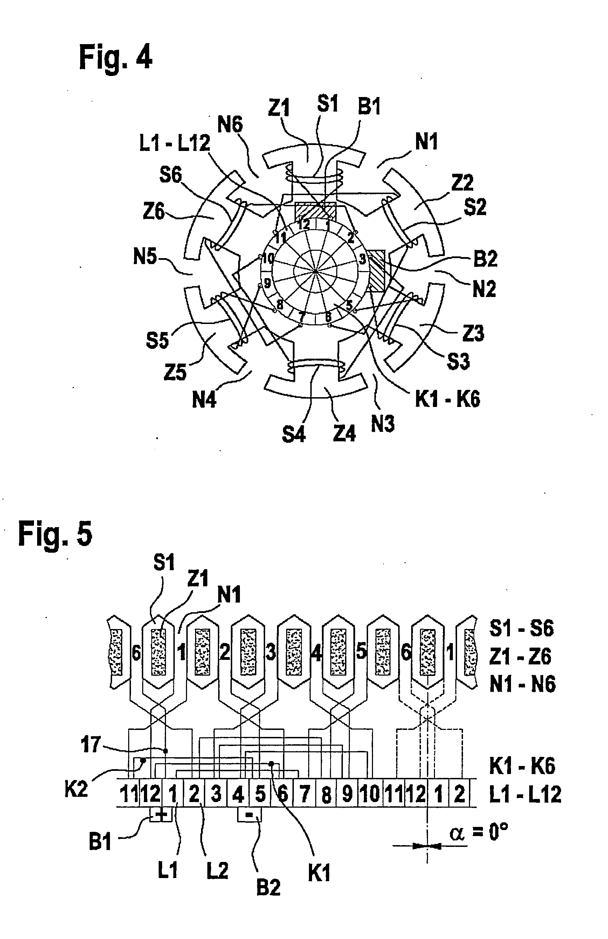

In Figur 4 ist als zweites Ausführungsbeispiel der gleiche Läufer 13 mit sechs Polzähnen Z, sechs Spulen S und zwölf Lamellen L am Kommutator 16 dargestellt, wobei jedoch die Spulen S in einer anderen Folge mit den Lamellen L verschaltet sind. Dies ist durch das in Figur 5 dargestellt Wickelschema erkennbar, das nunmehr mit Hilfe der Wickeltabelle 3 für die sechs Spulen S und Kontaktbrücken K aus Figur 4 und 5 näher erläutert wird. Alle Spulen S1 bis S6 und Kontaktbrücken K1 bis K6 lassen sich gemäß dieser Wickeltabelle von einem Wickelautomaten durchgehend herstellen. Dabei ist wie folgt vorzugehen:

### Wickeltabelle 3

| S/K | Lamelle | | Nut | Windg. | Nut | | Lamelle |
|---|---|---|---|---|---|---|---|
| S1 | 1 | > | 6 | 42 | 1 | > | 12 |
| K1 | 12 | > | | | | > | 6 |
| S2 | 6 | > | 2 | 42 | 1 | > | 11 |
| K2 | 11 | > | | | | > | 5 |
| S3 | 5 | > | 2 | 42 | 3 | > | 4 |
| K3 | 4 | > | | | | > | 10 |
| S4 | 10 | > | 4 | 42 | 3 | > | 3 |
| K4 | 3 | > | | | | > | 9 |
| S5 | 9 | > | 4 | 42 | 5 | > | 8 |
| K5 | 8 | > | | | | > | 2 |
| S6 | 2 | > | 6 | 42 | 5 | > | 7 |
| K6 | 7 | > | | | | > | 1 |

Der Wickeldraht 17 wird zunächst an der Lamelle 1 befestigt und der Anfang der Spule S1 wird sodann von der Lamelle L1 durch die Nut N6 gelegt, die Spule mit 42 Windungen auf den Polzahn Z1 gewickelt und das Ende durch die Nut N1 auf Lamelle L12 gelegt. Ohne Unterbrechung folgt nun die Kontaktbrücke K1 von Lamelle L12 zur Lamelle L6. Danach wird die Spule S2 mit ihrem Anfang von Lamelle L6 durch die Nut N2 mit 42 Windungen um den Zahn Z2 gewickelt und das Ende durch die Nut N1 auf Lamelle L11 gelegt. Anschließend folgt die Kontaktbrücke K2 von Lamelle L11 zur Lamelle L5. Dann wird der Anfang der Spule S3 von Lamelle L5 durch die Nut N2 gelegt, die Spule mit 42 Windungen auf den Polzahn Z3 gewickelt und das Ende durch die Nut N3 auf Lamelle L4 gelegt. Danach wird die Kontaktbrücke K3 von Lamelle L4 auf Lamelle L10 gelegt. Nun wird der Anfang der Spule S4 von Lamelle L10 durch die Nut N4 gelegt, die Spule mit 42 Windungen um den Polzahn Z4 gewickelt und das Ende durch die Nut N3 auf Lamelle L3 gelegt. Es folgt die Kontaktbrücke K4 von Lamelle L3 auf Lamelle L9. Dann wird die Spule S5 mit ihrem Anfang von Lamelle L9 durch die Nut N4 gelegt, die Spule mit 42 Windungen auf den Polzahn Z5 gewickelt und das Ende durch die Nut N5 auf Lamelle L8 gelegt. Es folgt die Kontaktbrücke K5 von Lamelle L8 zur Lamelle L2. Die Spule S6 wird nun mit ihrem Anfang von Lamelle L2 durch die Nut N6 verlegt, dann mit 42 Windungen um den Polzahn Z6 gewickelt und das Ende durch die Nut N5 auf Lamelle L7 gelegt. Schließlich folgt noch die Kontaktbrücke K6, die von Lamelle L7 zur Lamelle L1 gelegt wird. Damit ist die Läuferwicklung vollständig und der Wickeldraht 17 wird an Lamelle L1 gekappt.

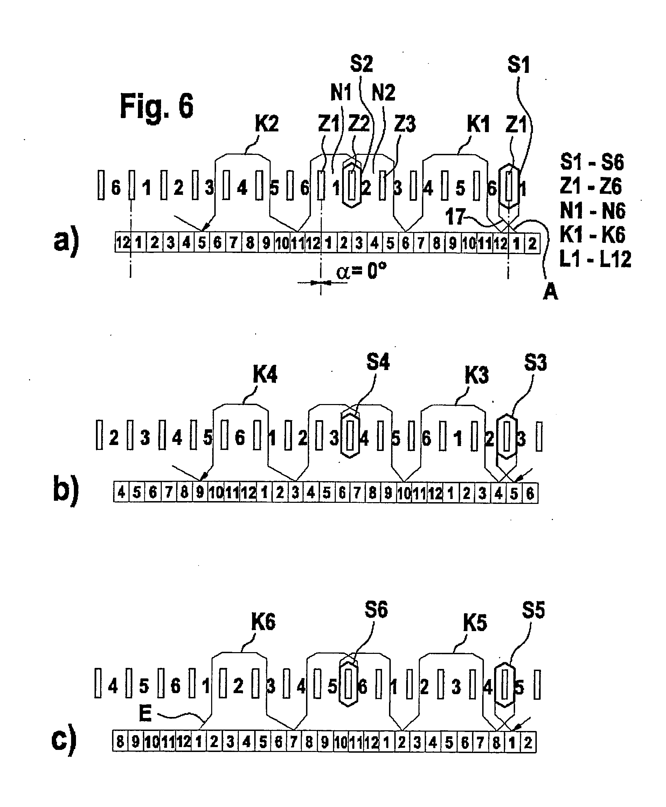

In Figur 6 ist ein weiteres Ausführungsbeispiel für die Verschaltung der Spulen S und Kontaktbrücken K am Läufer 13 nach Figur 2 dargestellt. Die Figur 6 zeigt dabei das Wickelschema, welches zur besseren Übersicht in die Abschnitte a, b und c aufgegliedert ist. Dabei zeigt der Abschnitt a einen ersten Wickelzug mit den Spulen S1 und S2 und den Kontaktbrücken K1 und K2. Der Abschnitt b zeigt einen weiteren, sich daran anschließenden Wickelzug mit den Spulen S3 und S4 sowie den Kontaktbrücken K3 und K4. Der Abschnitt c zeigt schließlich den sich daran anschließenden letzten Wickelzug mit den Spulen S5 und S6 und den Kontaktbrücken K5 und K6. Dort ist erkennbar, dass die Spulenanfänge und -enden zum Teil, sowie die Kontaktbrücken K vollständig von der Kommutatorseite weg durch Nuten N auf die dem Kommutator abgewandte Seite des Läufers 13 verlegt wurden. Die Kontaktbrücken K sind dabei auf der Rückseite des Läufers um jeweils zwei Polzähne Z herumgeführt. Auch bei diesem Ausführungsbeispiel sind alle Spulen S und Kontaktbrücken K mit einem Wicklungsdraht 17 mittels Wickelautomaten durchwickelbar herzustellen, was nunmehr mit Hilfe der Wickeltabelle 4 erläutert wird. Entsprechend dem Wickelschema nach Figur 6 ist auch die Wickeltabelle in die Abschnitte a, b und c aufgegliedert. Danach ergibt sich die folgende Schrittfolge:

### Wickeltabelle 4

| S/K | Lam. | | Nut | Wdg. | Nut | Nut | Wdg. | Nut | Wdg. | Nut | | Lam. |
|---|---|---|---|---|---|---|---|---|---|---|---|---|
| S1 | 1 | > | 6 | 42 | 1 | | | | | | > | 12 |
| K1 | 12 | > | 6 | 1 | 4 | | | | | | > | 6 |
| S2 | 6 | > | 3 | 1/2 | 1 | 2 | 41 | 2 | 1/2 | 6 | > | 11 |
| K2 | 11 | > | 5 | 1 | 3 | | | | | | > | 5 |
| S3 | 5 | > | 2 | 42 | 3 | | | | | | > | 4 |
| K3 | 4 | > | 2 | 1 | 6 | | | | | | > | 10 |
| S4 | 10 | > | 5 | 1/2 | 3 | 4 | 41 | 4 | 1/2 | 2 | > | 3 |
| K4 | 3 | > | 1 | 1 | 5 | | | | | | > | 9 |
| S5 | 9 | > | 4 | 42 | 5 | | | | | | > | 8 |
| K5 | 8 | > | 4 | 1 | 2 | | | | | | > | 2 |
| S6 | 2 | > | 1 | 1/2 | 5 | 6 | 41 | 6 | 1/2 | 4 | > | 7 |
| K6 | 7 | > | 3 | 1 | 1 | | | | | | > | 1 |

Zunächst wird im Abschnitt a des Wickelschemas der Wickeldraht 17 mit Lamelle L1 kontaktiert und der Anfang A der Spule S1 wird in die Nut N6 gelegt, danach werden 42 Windungen um den Zahn Z1 gewickelt und dann das Ende durch die Nut N1 auf die Lamelle L12 gelegt. Es folgt jetzt die Kontaktbrücke K1, die von Lamelle L12 durch die Nut 6 zur Rückseite des Läufers gelegt wird und von dort durch die Nut N4 zur Lamelle L6 geführt wird. Von Lamelle L6 wird nun die Spule S2 mit ihrem Anfang durch die Nut N3 zur Rückseite des Läufers und von dort zur Nut N1 geführt, dann werden über die Nut N2 41 Windungen auf den Polzahn Z2 gewickelt und schließlich das Ende von der Nut N2 über die Rückseite des Läufers zur Nut N6 und von dort schließlich zur Lamelle L11 gelegt. Jetzt folgt die Brücke K2, die von Lamelle L11 durch die Nut N5 zur Läuferrückseite geführt wird und von dort über zwei Zähne durch die Nut N3 zurückgeführt und zur Lamelle L5 gelegt wird. Die Fortführung erfolgt nun im Abschnitt b des Wickelschemas von Lamelle L5. Von dort wird der Anfang der Spule S3 durch die Nut N2 gelegt und die Spule mit 42 Windungen um den Polzahn Z3 gewickelt, wobei das Ende durch die Nut N3 auf die Lamelle L4 gelegt wird. Es folgt die Kontaktbrücke K3, die von Lamelle L4 durch die Nut N2 auf die Läuferrückseite gelegt, von dort über zwei Zähne Z durch die Nut N6 zurückgeführt und dann auf Lamelle L10 gelegt wird. Es folgt die Spule S4, die mit ihrem Anfang von Lamelle L10 durch die Nut N5 hindurch und auf der Läuferrückseite zur Nut N3 geführt wird, dann durch die Nut N4 mit 41 Windungen um den Zahn Z4 gewickelt wird, wobei dann das Ende von der Nut N4 über die Läuferrückseite zur Nut N2 überführt und schließlich auf Lamelle L3 gelegt wird. Es folgt die Kontaktbrücke K4, die von Lamelle L3 über die Nut N1 zur Läuferrückseite geführt, von dort über zwei Polzähne Z durch die Nut N5 zur Lamelle L9 gelegt wird. Es folgt nun im dritten Abschnitt c des Wickelschemas die Spule S5, wobei zunächst der Anfang von Lamelle L9 durch die Nut N4 gelegt, die Spule mit 42 Windungen gewickelt und dann das Ende durch die Nut N5 auf Lamelle L8 gelegt wird. Von dort folgt die Kontaktbrücke K5, die von Lamelle L8 durch die Nut N4 zur Läuferrückseite geführt wird und von dort über zwei Polzähne Z hinweg durch die Nut N2 zur Lamelle L2 gelegt wird. Jetzt folgt die Spule S6, deren Anfang von Lamelle 2 durch die Nut N1 zur Läuferrückseite geführt wird und von dort über die Nut N5 und N6 mit 41 Windungen um den Zahn Z6 gewickelt wird, wobei das Ende von der Nut 6 über die Läuferrückseite durch die Nut N4 hindurch auf Lamelle L7 gelegt wird. Schließlich wird noch die Kontaktbrücke K6 von der Lamelle L7 durch die Nut N3 auf die Läuferrückseite geführt und von dort über zwei Polzähne Z durch die Nut N1 wieder zurückgeführt. Das Ende E des Wicklungsdrahtes gelangt von dort wieder zur Lamelle L1.

Die Besonderheit bei dem Ausführungsbeispiel nach Figur 6 ist, dass dort nicht nur die Kontaktbrücken K,von der Kommutatorseite weg zur Rückseite des Läufers verlegt werden, sondern in gleicher Weise auch Anfang und Ende einer jeden zweiten Spule durch jeweils benachbarte Nuten auf die dem Kommutator abgewandte Seite des Läufers verlegt werden. Dadurch erhält man auf der Kommutatorseite eine optimale Drahtführung, indem dort der Wicklungsdraht jeweils von den Lamellen auf kürzestem Weg zu einer Nut geführt wird.

Die Erfindung ist nicht auf die dargestellten Ausführungsbeispiele beschränkt, da die Spulen auf unterschiedlichste Weise mit den Lamellen des Kommutators zu verschalten sind. So können die Spulen und Kontaktbrücken beispielsweise auch in umgekehrter Folge von Wickelautomaten hergestellt werden. Auch können die Kontaktbrücken am Kommutator im Bedarfsfall separat hergestellt sein. Außerdem kann es zweckmäßig sein, den Kommutator 16 gegenüber den Nuten des Läufers 13 mehr oder weniger stark in die eine oder andere Richtung versetzt auf der Läuferwelle 15 zu befestigen, so dass zwischen dem Polzahn Z1 und dem Lamellenschlitz zwischen Lamelle L1 und Lamelle L12 ein mehr oder weniger großer Versetzungswinkel α auftritt, um auf diese Weise fertigungstechnisch günstige Verbindungen zwischen den Läuferlamellen und den Spulen zu bekommen. In den Ausführungsbeispielen ist ein Versetzungswinkel α = 0° realisiert. Da die Kontaktbrücken K jeweils einander gegenüberliegende Lamellen L miteinander verbinden, können die Kontaktbrücken wahlweise in die eine oder andere Richtung am Läufer herumgeführt werden, wie dies in den Ausführungsbeispielen nach Figur 3 und 5 erkennbar ist. Entsprechendes gilt aber auch für die Kontaktbrücken, die gemäß dem Ausführungsbeispiel nach Figur 6 auf die Läuferrückseite verlegt sind. Außerdem ist es auch möglich, diese Kontaktbrücken nicht über zwei Polzähne gemäß Figur 6 sondern über jeweils nur einen Polzahn durch die benachbarte Nut wieder zur Kommutatorseite zurück zu führen.

Die Erfindung ist auch nicht auf vierpolige Maschinen beschränkt, da in gleicher Weise auch acht- und zwölfpolige Maschinen mit einem Kommutatorläufer auszurüsten sind, bei dem dann von den zwölf oder achtzehn Spulen die jeweils benachbarten Spulen abwechselnd unmittelbar oder über eine Kontaktbrücke auf benachbarte Lamellen gelegt werden.

## Patentansprüche

1. Elektrische Maschine mit mindestens vier Erregerpolen im Stator (11) und mit einem Kommutatorläufer (13), der eine Anzahl von Nuten (N) und Polzähnen (Z) am Umfang aufweist, die größer als die Anzahl der Erregerpole ist, mit einer Anzahl von Kommutatorlamellen (L), die doppelt so groß wie die Anzahl der Polzähne ist, und mit mindestens einem Paar ortsfester Kohlebürsten (B), die um eine Polteilung der Erregerpole zueinander versetzt mit den Lamellen des Kommutators zur Stromversorgung von Spulen (S) zusammenwirken, welche auf jeweils einen der Polzähne gewickelt sind, wobei jeweils die sich diametral gegenüberliegenden Lamellen über Kontaktbrücken (K) miteinander verbunden sind, **dadurch gekennzeichnet, dass** bei einer geraden Anzahl von Nuten (N), Polzähnen (Z) und Spulen (S) von den auf benachbarten Polzähnen (Z1, Z2) angeordneten Spulen (S1, S2) der Anfang und das Ende der einen Spule (S1) jeweils unmittelbar auf zueinander benachbarte Lamellen (L1, L12) und der Anfang der anderen Spule (S2) über eine der Kontaktbrücken (K1-K6) sowie das Ende unmittelbar, beziehungsweise umgekehrt, auf zueinander benachbarte Lamellen (L12, L11 bzw. L6, L5) geschaltet sind.

2. Elektrische Maschine nach Anspruch 1, **dadurch gekennzeichnet, dass** die in der einen Drehrichtung gesehen benachbarten Spulen (S1, S2) mit ihren Anfängen und Enden auf die in der anderen Drehrichtung gesehen benachbarten Lamellen (L1, L12; L12, L11) gelegt sind.

3. Elektrische Maschine nach Anspruch 2, **dadurch gekennzeichnet, dass** die Anfänge und Enden der benachbarten Spulen (S1, S2) abwechselnd direkt beziehungsweise indirekt über eine Kontaktbrücke (K1) auf benachbarte Lamellen (L1, L12; L12, L11) gelegt sind.

4. Elektrische Maschine nach einem der Ansprüche 1 bis 3, **dadurch gekennzeichnet, dass** die auf benachbarten Polzähnen (Z1, Z2) angeordneten Spulen (S1, S2) jeweils unmittelbar oder mittelbar über eine der Kontaktbrücken (K) zueinander in Reihe geschaltet sind.

5. Elektrische Maschine nach Anspruch 4, **dadurch gekennzeichnet, dass** die benachbarten Spulen (S1, S2) abwechselnd unmittelbar beziehungsweise über die Kontaktbrücke (K1) zueinander in Reihe geschaltet sind.

6. Elektrische Maschine nach Anspruch 5, **dadurch gekennzeichnet, dass** alle, vorzugsweise sechs Spulen (S) und Kontaktbrücken (K) durchgehend mit einem Wickeldraht (17) hergestellt sind.

7. Elektrische Maschine nach Anspruch 6, **dadurch gekennzeichnet, dass** die Spulen (S) und Kontaktbrücken (K) im Wechsel durchgehend gewickelt sind.

8. Elektrische Maschine nach einem der Ansprüche 6 oder 7, **dadurch gekennzeichnet, dass** zumindest ein Teil der Kontaktbrücken (K), vorzugsweise alle Kontaktbrücken, von der Kommutatorseite des Läufers (13) durch dessen Nuten (N) auf die dem Kommutator (16) abgewandte Seite des Läufers (15) verlegt sind.

9. Elektrische Maschine nach Anspruch 8, **dadurch gekennzeichnet, dass** die zu der dem Kommutator (16) abgewandten Seite des Läufers (13) verlegten Kontaktbrücken (K) um mindestens einen Polzahn (Z) und um höchstens zwei Polzähne (Z) des Läufers (13) geführt sind.

10. Elektrische Maschine nach einem der Ansprüche 6 bis 9, **dadurch gekennzeichnet, dass** Anfang und Ende einer jeden zweiten Spule (S2) von der Kommutatorseite durch benachbarte Nuten (N) auf die dem Kommutator (16) abgewandte Seite des Läufers gelegt sind.

## Claims

1. Electrical machine having at least four exciter poles in the stator (11) and having a commutator rotor (13) which has a number of slots (N) and pole teeth (Z) on the circumference, this number being greater than the number of exciter poles, having a number of commutator laminations (L) which is twice as high as the number of pole teeth, and having at least one pair of stationary carbon brushes (B) which, in a manner offset in relation to one another by a pole pitch of the exciter poles, interact with the laminations of the commutator for supplying power to coils (S) which are wound onto in each case one of the pole teeth, with in each case the diametrically opposite laminations being connected to one another via contact bridges (K), **characterized in that,** given an even number of slots (N), pole teeth (Z) and coils (S), from amongst the coils (S1, S2) arranged on adjacent pole teeth (Z1, Z2), the start and the end of one coil (S1) are in each case connected directly to laminations (L1, L12) which are adjacent to one another, and the start of the other coil (S2) is connected via one of the contact bridges (K1-K6) and the end is connected directly, or conversely, to laminations (L12, L11 or L6, L5) which are adjacent to one another.

2. Electrical machine according to Claim 1, **characterized in that** the coils (S1, S2), which are adjacent as seen in one direction of rotation, are placed, by way of their starts and ends, on the laminations (L1, L12; L12, L11) which are adjacent as seen in the other direction of rotation.

3. Electrical machine according to Claim 2, **characterized in that** the starts and ends of the adjacent coils (S1, S2) are alternately placed on adjacent laminations (L1, L12; L12, L11) directly or indirectly via a contact bridge (K1).

4. Electrical machine according to one of Claims 1 to 3, **characterized in that** the coils (S1, S2) which are arranged on adjacent pole teeth (Z1, Z2) are in each case connected to one another in series directly or indirectly via one of the contact bridges (K).

5. Electrical machine according to Claim 4, **characterized in that** the adjacent coils (S1, S2) are connected to one another in series directly and via the contact bridge (K1) alternately.

6. Electrical machine according to Claim 5, **characterized in that** all, preferably six, coils (S) and contact bridges (K) are continuously produced with a winding wire (17).

7. Electrical machine according to Claim 6, **characterized in that** the coils (S) and contact bridges (K) are alternately continuously wound.

8. Electrical machine according to one of Claims 6 and 7, **characterized in that** at least some of the contact bridges (K), preferably all of the contact bridges, are laid from the commutator side of the rotor (13), through the slots (N) in said rotor, onto that side of the rotor (15) which is averted from the commutator (16).

9. Electrical machine according to Claim 8, **characterized in that** the contact bridges (K) which are laid on that side of the rotor (13) which is averted from the commutator (16) are guided around at least one pole tooth (Z) and around at most two pole teeth (Z) of the rotor (13).

10. Electrical machine according to one of Claims 6 to 9, **characterized in that** the start and end of each second coil (S2) are placed, from the commutator side through adjacent slots (N), on that side of the rotor which is averted from the commutator (16).

## Revendications

1. Machine électrique comprenant au moins quatre pôles d'excitation dans le stator (11) et comprenant au moins un rotor à collecteur (13) qui présente sur son pourtour un nombre de rainures (N) et de dents polaires (Z) qui est supérieur au nombre de pôles d'excitation, comprenant un nombre de lamelles de collecteur (L) qui est égal au double du nombre de dents polaires et au moins une paire de balais (B) fixes qui sont décalés l'un de l'autre d'une division polaire des pôles d'excitation et qui interagissent avec les lamelles pour l'alimentation électrique de bobines (S), lesquelles sont respectivement enroulées sur l'une des dents polaires, les lamelles diamétralement opposées étant reliées entre elles par des cavaliers de contact (K), **caractérisée en ce que** dans le cas d'un nombre pair de rainures (N), de dents polaires (Z) et de bobines (S), parmi les bobines (S1, S2) disposées sur des dents polaires (Z1, Z2) voisines, le début et la fin de l'une (S1) des bobines sont à chaque fois connectées à des lamelles (L1, L12) voisines l'une de l'autre et le début de l'autre bobine (S2) par le biais de l'un des cavaliers de contact (K1-K6) et la fin directement, ou inversement, à des lamelles (L12, L11 ou L6, L5) voisines l'une de l'autre.

2. Machine électrique selon la revendication 1, **caractérisée en ce que** les débuts et les fins des bobines (S1, S2) voisines quand elles sont vues dans un sens de rotation sont appliqués aux lamelles (L1, L12 ; L12, L11) voisines quand elles sont vues dans l'autre sens de rotation.

3. Machine électrique selon la revendication 2, **caractérisée en ce que** les débuts et les fins des bobines (S1, S2) voisines sont appliqués en alternance directement ou indirectement par le biais d'un cavalier de contact (K1) aux lamelles (L1, L12; L12, L11) voisines.

4. Machine électrique selon l'une des revendications 1 à 3, **caractérisée en ce que** les bobines (S1, S2) disposées sur des dents polaires (Z1, Z2) voisines sont respectivement branchées en série l'une avec l'autre directement ou indirectement par le biais de l'un des cavaliers de contact (K).

5. Machine électrique selon la revendication 4, **caractérisée en ce que** les bobines (S1, S2) voisines sont branchées en série l'une avec l'autre en alternance directement ou indirectement par le biais de l'un des cavaliers de contact (K1).

6. Machine électrique selon la revendication 5, **caractérisée en ce que** tous, de préférence six bobines (S) et cavaliers de contact (K) sont fabriqués en continu avec un fil d'enroulement (17).

7. Machine électrique selon la revendication 6, **caractérisée en ce que** les bobines (S) et les cavaliers de contact (K) sont enroulés continuellement en alternance.

8. Machine électrique selon l'une des revendications 6 ou 7, **caractérisée en ce qu'**au moins une partie des cavaliers de contact (K), de préférence tous les cavaliers de contact, sont placés depuis le côté collecteur du rotor (13) au travers de ses rainures (N) sur le côté du rotor (15) à l'opposé du collecteur (16).

9. Machine électrique selon la revendication 8, **caractérisée en ce que** les cavaliers de contact (K) placés vers le côté du rotor (13) à l'opposé du collecteur (16) passent autour d'au moins une dent polaire (Z) et autour d'au plus deux dents polaires (Z) du rotor (13).

10. Machine électrique selon l'une des revendications 6 à 9, **caractérisée en ce que** le début et la fin de chaque deuxième bobine (S2) sont posés sur le côté du rotor à l'opposé du collecteur (16) depuis le côté collecteur à travers des rainures (N) voisines.
